(19) Europäisches Patentamt

European Patent Office

Office européen des brevets

(11) EP 1 087 279 B1

(12) EUROPÄISCHE PATENTSCHRIFT

(45) Veröffentlichungstag und Bekanntmachung des Hinweises auf die Patenterteilung:
**11.02.2004 Patentblatt 2004/07**

(51) Int Cl.⁷: **G05B 19/416**

(21) Anmeldenummer: **00115191.9**

(22) Anmeldetag: **13.07.2000**

(54) **Verfahren zur automatischen Bestimmung der Auftreffgeschwindigkeit einer Aufzugtür auf einem Hindernis**

Process for the automatic determination of the impact velocity of a liftdoor with an obstacle

Procédé pour la détermination automatique de la vitesse de collision d'une porte d'ascenseur contre un obstacle

(84) Benannte Vertragsstaaten:
**AT DE PT**

(30) Priorität: **15.09.1999 DE 19944125**

(43) Veröffentlichungstag der Anmeldung:
**28.03.2001 Patentblatt 2001/13**

(73) Patentinhaber: **Aufzugswerke M. Schmitt & Sohn GmbH & Co.**
**90402 Nürnberg (DE)**

(72) Erfinder:
• **Kaldenhoff, Peter**
**90427 Nürnberg (DE)**

• **Linde, Mathias**
**90425 Nürnberg (DE)**

(74) Vertreter: **LOUIS- PÖHLAU- LOHRENTZ**
**Postfach 3055**
**90014 Nürnberg (DE)**

(56) Entgegenhaltungen:
**EP-A- 0 548 505     DE-A- 4 206 272**
**DE-U- 9 202 631     US-A- 4 498 033**
**US-A- 5 864 104**

**Beschreibung**

Die Erfindung betrifft ein Verfahren zur automatischen Bestimmung der von ihrer Masse abhängigen, maximal zulässigen Auftreffgeschwindigkeit einer von einem Antriebsmotor angetriebenen Aufzugtür auf einem Hindernis.

Gemäß der seit dem 1.7.1999 in den EG-Staaten verbindlich geltenden Norm DIN EN 81 darf die Energie, mit der eine zufahrende Aufzugtür auf ein Hindernis auftrifft, zehn Joule nicht überschreiten. Die maximal zulässige Auftreffgeschwindigkeit hängt von der Masse der Aufzugtür, d.h. von den bewegten Türkomponenten der Aufzugtür ab. Die Ermittlung der Masse der bewegten Türkomponenten ist insbesondere bei mehrflügeligen Aufzugtüren für den Aufzugmonteur sehr aufwendig bzw. kaum exakt möglich. Entsprechendes gilt für die Messung der vom Aufzugmonteur einzustellenden Schließgeschwindigkeit der Aufzugtür.

Aus der DE 92 02 631 U1 ist eine Einrichtung für die Überwachung der kinetischen Energie einer Schiebetür bekannt, die einen von einem Netzteil gespeisten Antriebsmotor mit digitalem Impulsgeber, eine Impulsauswerteeinrichtung und ein zum Verarbeiten der Signale der Impulsauswerteeinrichtung eingerichtetes Prozessorsystem mit einem Controller aufweist. Diese bekannte Einrichtung kann ein Motorstrom-Erfassungsglied aufweisen, das insbesondere mit einem Analog/Digitalwandler verbunden ist. Außerdem kann diese bekannte Einrichtung einen mit dem Controller verbundenen Motorstrombegrenzer aufweisen, der als Türgeschwindigkeits-Steuerglied wirkend in der Leitung vom Netzteil zum Motor angeordnet ist.

Die EP 0 548 505 A1 beschreibt ein Verfahren und eine Vorrichtung zur Bestimmung der dynamischen Masse und der mittleren Reibungskraft einer Aufzugstür. Hierbei werden bei einem Schiebetürsystem die Massen und die Reibungskräfte aller beweglich miteinander verbundenen Anlageteile auf den Türflügel bezogen und mit Hilfe des Schließgewichtes numerisch bestimmt. Hierzu wird der Türflügel einer Öffnungslernfahrt und einer Schließlernfahrt unterzogen und dabei, nicht angetrieben, über je eine Teststrecke geführt. Aus dabei gemessenen kinematischen Parametern wird je eine erste Energiebilanz bzw. eine zweite Energiebilanz aufgestellt. Die Energiebilanzen enthalten die potentielle Energie des Schließgewichtes mit positivem bzw. negativem Vorzeichen und ergeben in Kombiriation spezielle Formeln für die numerischen Werte der dynamischen Masse und der mittleren Reibungskraft des Schiebetürsystemes. Zum Messen, Speichern und Verarbeiten der kinematischen Parameter sowie zum Berechnen der numerischen Werte der dynamischen Masse und der mittleren Reibungskraft dienen der Mikroprozessor und der Inkrementalgeber des Türantriebes. Dieses bekannte Verfahren eignet sich insbesondere zur Bestimmung der sicherheitstechnisch maximal zulässigen Schließgeschwindigkeit von Schiebe- und Schwenktüren.

Der Erfindung liegt die Aufgabe zugrunde, ein Verfahren der eingangs genannten Art zu schaffen, wobei die Ermittlung der wirksamen Masse der Aufzugtür und der von der Aufzugtür-Masse abhängigen, maximal zulässigen Auftreffgeschwindigkeit der Aufzugtür auf ein Hindernis automatisiert ist, so daß Fehleinstellungen der Aufzugtür-Geschwindigkeit durch den Aufzugmonteur ausgeschlossen sind.

Diese Aufgabe wird erfindundsgemäß dadurch gelöst, daß zuerst eine Lemfahrt durchgeführt wird, bei der die Aufzugtür mit Schleichgeschwindigkeit fährt, wobei die Stromstärke des die Reibungskräfte der Aufzugtür überwindenden Antriebsmotors gemessen wird, daß anschließend während einer definierten Zeitspanne ($\Delta$ t) die Stromstärke um einen definierten Betrag ($\Delta$ I) erhöht und hierdurch die Aufzugtür in Abhängigkeit von ihrer Masse (m) definiert beschleunigt und die entsprechende Geschwindigkeitszunahme ($\Delta$ v) bestimmt wird, daß aus der aus der Stromerhöhung ($\Delta$ I), der Zeitspanne ($\Delta$ t) der Stromerhöhung ($\Delta$ I) und der daraus resultierenden Geschwindigkeitszunahme ($\Delta$ v) in einer Regel- und Steuerelektronikeinrichtung die Masse (m) der Aufzugtür berechnet wird, und daß aus der berechneten Aufzugtür-Masse die maximal zulässige Auftreffgeschwindigkeit ($v_{max}$) der Aufzugtür bestimmt und in einem nicht flüchtigen Speicher gespeichert wird. Dabei hat es sich als zweckmäßig erwiesen, wenn die Lemfahrt zwischen einem ersten und einem zweiten Türanschlag der Aufzugtür durchgeführt wird. Die definierte Beschleunigung der Aufzugtür kann in einem mittleren Abschnitt des Verfahrweges der Aufzugtür zwischen dem zweiten und dem ersten Türanschlag durchgeführt werden, nachdem die Aufzugtür mit Schleichgeschwindigkeit wieder vom zweiten Türanschlag zurückfährt.

Erfindungsgemäß ermittelt die Regel- und Steuerelektronikeinrichtung die Masse der Aufzugtür bei der Inbetriebnahme des Aufzugtür-Antriebs, die von einem Aufzugmonteur durchgeführt wird, selbständig. Diese Massebestimmung geschieht im Rahmen der erwähnten Lemfahrt, bei welcher die Aufzugtür mit Schleichgeschwindigkeit zweckmäßigerweise von einem Türanschlag zum anderen Türanschlag gefahren wird. Diese Lemfahrt wird vom Aufzugmonteur ausgelöst. Während dieser Lernfahrt wird die Stromstärke gemessen, die vom Antriebsmotor aufgenommen wird, um die Reibungskräfte entlang des Verfahrweges der Aufzugtür zu überwinden. Anschließend wird die Aufzugtür mit Schleichgeschwindigkeit wieder vom zweiten Türanschlag in Richtung zum ersten Türanschlag zurückgefahren. In einem mittleren Abschnitt des Verfahrweges der Aufzugtür zwischen dem zweiten und dem ersten Türanschlag wird die den Antriebsmotor beaufschlagende Stromstärke um einen definierten Betrag erhöht, woraus eine entsprechende Beschleunigung der Aufzugtür resultiert. Diese Beschleunigung entspricht der erwähnten Geschwindigkeitszunahme während der definierten Zeitspanne, während welcher die Stromstärke um den definierten Betrag erhöht worden ist. Daraus ist die Masse der Aufzugtür mit Hilfe der Regel- und Steuerelektronikeinrichtung berechenbar. Die zur Masse und zum Quadrat der maximal zulässigen Auftreffgeschwindigkeit proportionale Energie darf - wie oben ausgeführt worden ist - zehn Joule nicht überschreiten. Daraus läßt sich die maximale Auftreffgeschwindigkeit der Aufzugtür auf ein Hindernis automatisch bestimmen und permanent speichern. Zu diesem Zweck ist die mit dem Antriebsmotor zusammengeschaltete Regel- und Steuerelektronikeinrichtung Ober einen mit dem Antriebsmotor kombinierten Inkrementaldrehgeber rückgekoppelt, so daß sich ein geschlossener Regelkreis ergibt, wobei die Regel- und Steuerelektronikeinrichtung Einstellregler zur Einstellung einer bestimmten Auf- und Zufahrgeschwindigkeit der Aufzugtür sowie ein Zeitglied, eine Strommeßeinrichtung zur Messung des den Antriebsmotor beaufschlagenden elektrischen Stromes und einen nicht flüchtigen Speicher aufweist. Der nicht flüchtige Speicher ist zweckmäßigerweise von einem EEPROM gebildet.

Mit Hilfe der Einstellregler ist es nicht möglich, eine größere Geschwindigkeit einzustellen als die der jeweiligen Aufzugtür-Masse entsprechende maximale Auftreffgeschwindigkeit der Aufzugtür auf ein Hindernis. Sind die Einstellregler voll aufgedreht, so wird die maximal zulässige Auftreffgeschwindigkeit hundertprozentig erreicht. Sind die Einstellräder beispielsweise halb aufgedreht, so wird auch nur die halbe maximal zulässige Auftreffgeschwindigkeit der Aufzugtür auf ein Hindernis erreicht. Ein Überschreiten der maximal zulässigen Auftreffgeschwindigkeit der Aufzugtür auf ein Hindernis ist erfindungsgemäß also ausgeschlossen. Der Aufzugmonteur kann in vorteilhafter Weise folglich weder etwas vergessen noch etwas falsch machen.

Zur weiteren Verdeutlichung der Erfindung dient die nachfolgende Beschreibung in Verbindung mit der Zeichnung. Es zeigen:

Figur 1 eine stark schematisierte Darstellung einer Aufzugtür mit den zugehörigen Komponenten zur Realisierung der Erfindung,

Figur 2 eine Diagrammdarstellung des Funktionszusammenhanges zwischen der den Antriebsmotor der Aufzugtür beaufschlagenden Stromstärke I und der Zeit t, und

Figur 3 den dem Funktionszusammenhang I (t) gemäß Figur 2 entsprechenden Funktionszusammenhang der Geschwindigkeit v der Aufzugtür mit der Zeit t.

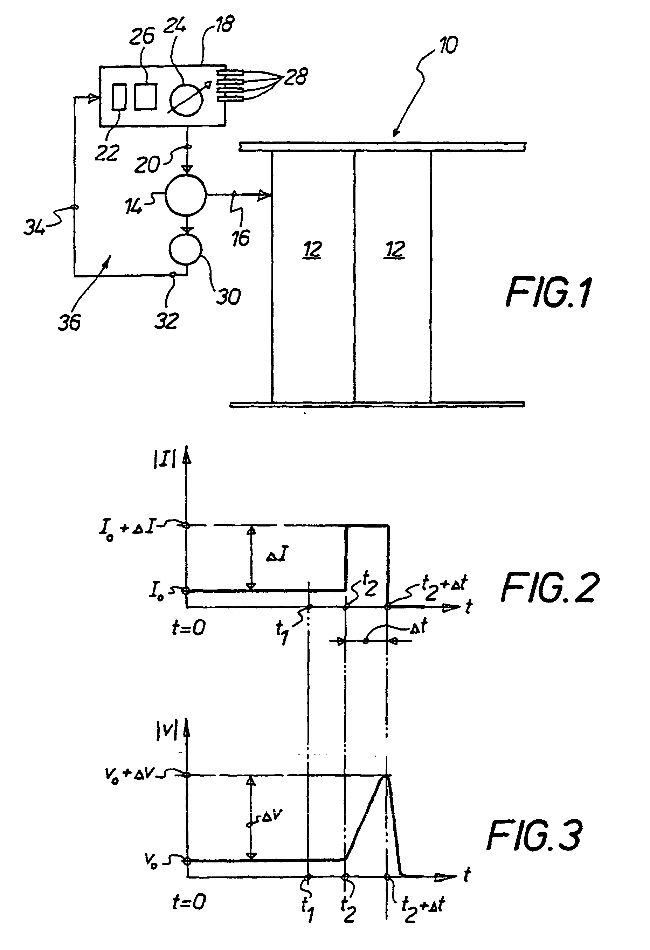

Figur 1 zeigt stark schematisiert eine Aufzugtür 10, die als mehrflügelige Aufzugtür ausgebildet ist, wobei zwei Türflügel 12 schematisch verdeutlicht sind.

Zum Antrieb der Aufzugtür 10 ist diese mit einem Antriebsmotor 14 wirkverbunden. Diese Verbindung ist durch den Pfeil 16 angedeutet. Der Antriebsmotor 14 ist mit einer Regel- und Steuerelektronikeinrichtung 18 zusammengeschaltet. Das ist durch den Pfeil 20 verdeutlicht. Die Regel- und Steuerelektronikeinrichtung 18 weist ein Zeitglied 22, eine Strommeßeinrichtung 24 und einen nicht flüchtigen Speicher 26 auf. Die Regel- und Steuerelektronikeinrichtung 18 ist außerdem mit Einstellreglern 28 versehen.

Mit dem Antriebsmotor 14 ist ein Inkrementaldrehgeber 30 kombiniert, dessen Signalausgang 32 zur Regel- und Steuerelektronikeinrichtung 18 rückgekoppelt ist. Diese Rückkopplung ist durch den Pfeil 34 angedeutet. Hierdurch ergibt sich ein geschlossener Regelkreis 36.

Die Funktionsweise des Regelkreises 36 ist wie folgt:

Bei der Inbetriebnahme der Antriebeinrichtung für die Aufzugtür 10 durch den Aufzugmonteur wird zuerst eine Lemfahrt durchgeführt, bei der die Aufzugtür 10 mit Schleichgeschwindigkeit $v_0$ (sh. Figur 3) fährt. Diese Schleichfahrt wird zweckmäßigerweise zwischen einem ersten und einem zweiten Türanschlag, d.h. während der entsprechenden Zeitspanne von t = 0 bis $t_1$ (sh. die Figuren 2 und 3) durchgeführt. Dabei wird die vom Antriebsmotor 14 aufgenommene Stromstärke $I_0$ (sh. Figur 2) mit der Strommeßeinrichtung 24 (sh. Figur 1) gemessen. Während dieser Schleichfahrt mit konstanter Schleichgeschwindigkeit $v_0$ werden nur die Reibungskräfte der Aufzugtür überwunden.

Anschließend wird die Aufzugtür 10 vom zweiten Türanschlag in Richtung zum ersten Türanschlag zurückgefahren. D.h., es ändert sich die Richtung der Geschwindigkeit, resultierend aus einer Stromrichtungsumkehr. Das wird in den Figuren 2 und 3 durch die Absolutbeträge der Ordinaten I und v berücksichtigt. Das Zurückfahren geschieht vom Zeitpunkt $t_1$ bis zu einem Zeitpunkt $t_2$ mit der Schleichgeschwindigkeit $v_0$, wobei der Antriebsmotor 14 weiterhin näherungsweise die Stromstärke $I_0$ aufnimmt. Durch den Begriff "näherungsweise" kommt zum Ausdruck, daß jede Schachttür ein Türschließgewicht aufweist, das über ein Seil mit der waagrecht laufenden Schachttür verbunden ist. Das Seil ist über eine Umlenkrolle geführt, so daß das Türschließgewicht senkrecht hängt. Beim Öffnen der Tür wird das Gewicht hochgezogen. Beim Schließen der Tür bewegt sich das Gewicht wieder nach unten. Zweck dieses Türschließgewichtes ist es, eine offenstehende Schachttür zu schließen, d.h. zuzuziehen, wenn die Aufzugskabine nicht hinter der entsprechenden Tür steht und sie offen hält. Hierdurch ergibt sich ein Schutz derart, daß niemand in den Aufzugsschacht fällt. Dies bedeutet jedoch, daß der Strom beim Auffahren der Aufzugtür um einen kleinen konstanten Wert höher ist als beim Zufahren. Diese Differenz wird beim Wechseln der Fahrtrichtung automatisch bestimmt und entsprechend berücksichtigt.

Zum Zeitpunkt $t_2$ befindet sich die Aufzugtür 10 in einem mittleren Abschnitt des Verfahrweges zwischen dem zweiten und dem ersten Türanschlag. Zum Zeitpunkt $t_2$ wird die Stromstärke I um einen definierten Betrag $\Delta$ I während einer definierten Zeitspanne $\Delta$ t erhöht, wie in Figur 2 dargestellt ist. Diese Stromerhöhung $\Delta$ I während der Zeit $\Delta$ t bedingt eine entsprechende Beschleunigung der Aufzugtür 10, d.h. eine entsprechende Zunahme der Geschwindigkeit der Aufzugtür 10 um den Betrag $\Delta$ v (sh. Figur 3). Diese Geschwindigkeitszunahme $\Delta$ v wird mit dem Inkrementaldrehgeber 30 erfaßt. Die vom Inkrementaldrehgeber erzeugten Signale werden über die Rückkopplung 34 in die Regel- und Steuerelektronikeinrichtung 18 eingegeben.

Unter Berücksichtigung des Wirkungsgrades η des Antriebsmotors 14, der beispielsweise aus dem zum Antriebsmotor 14 zugehörigen Datenblatt entnommen werden kann, kann die folgende mathematische Gleichung aufgestellt werden:

$$(1) \qquad \tfrac{1}{2} \, m\Delta v^2 = U(\Delta I)(\Delta t)\eta \qquad (1)$$

wobei m die Masse der Aufzugtür 10 und U die am Antriebsmotor 14 anliegende Motorbetriebsspannung bedeuten.

Aus dieser Energiebilanz-Gleichung kann mit Hilfe der Regel- und Steuerelektronikeinrichtung 18 die Masse der Aufzugtür 10 berechnet, d.h. bestimmt werden.

Aus der Ungleichung

$$(2) \qquad \tfrac{1}{2} \, m(v_{max})^2 < 10J \qquad (2)$$

ist es dann automatisch möglich, die maximal zulässige Auftreffgeschwindigkeit $v_{max}$ zu bestimmen. Der auf diese Weise automatisch bestimmte Wert $v_{max}$ wird im nicht flüchtigen Speicher 26 der Regel- und Steuerelektronikeinrichtung 18 gespeichert und findet ab dieser Inbetriebnahme des Aufzugtürantriebs Verwendung. Einstellungen an den Einstellreglern 28 für die Geschwindigkeit der Aufzugtür 10 wirken sich dann immer nur relativ zu dieser maximal erlaubten Geschwindigkeit $v_{max}$ aus. Ein "zu schnell-Stellen" der Türgeschwindigkeit ist folglich nicht mehr möglich. Der Aufzugmonteur kann - wie bereits erwähnt worden ist - weder etwas vergessen noch etwas falsch machen.

**Patentansprüche**

1. Verfahren zur automatischen Bestimmung der von ihrer Masse (m) abhängigen, maximal zulässigen Auftreffgeschwindigkeit ($v_{max}$) einer von einem Antriebsmotor (14) angetriebenen Aufzugtür (10) auf einem Hindernis,

**dadurch gekennzeichnet,**
**daß** zuerst eine Lemfahrt durchgeführt wird, bei der die Aufzugtür (10) mit Schleichgeschwindigkeit ($v_0$) fährt, wobei die Stromstärke ($I_0$) des die Reibungskräfte der Aufzugtür (10) überwindenden Antriebsmotors (14) gemessen wird, daß anschließend während einer definierten Zeitspanne ($\Delta$ t) die Stromstärke ($I_0$) um einen definierten Betrag ($\Delta$ I) erhöht und hierdurch die Aufzugtür (10) in Abhängigkeit von ihrer Masse (m) definiert beschleunigt und die entsprechende Geschwindigkeitszunahme ($\Delta$ v) bestimmt wird, daß aus der aus der Stromerhöhung ($\Delta$ I), der Zeitspanne ($\Delta$ t) der Stromerhöhung ($\Delta$ I) und der daraus resultierenden Geschwindigkeitszunahme ($\Delta$ v) in einer Regel- und Steuerelektronikeinrichtung (18) die Masse (m) der Aufzugtür berechnet wird, und daß aus der berechneten Aufzugtür-Masse (m) die maximal zulässige Auftreffgeschwindigkeit ($v_{max}$) der Aufzugtür bestimmt und in einem nicht flüchtigen Speicher (26) der Regel- und Steuerelektronikeinrichtung (18) gespeichert wird.

2. Verfahren nach Anspruch 1,
**dadurch gekennzeichnet,**
**daß** die Lernfahrt zwischen einem ersten und einem zweiten Türanschlag der Aufzugtür (10) durchgeführt wird.

3. Verfahren nach Anspruch 1 und 2,
**dadurch gekennzeichnet,**
**daß** die definierte Beschleunigung der Aufzugtür (10) in einem mittleren Abschnitt des Verfahrweges der Aufzugtür (10) zwischen dem zweiten und dem ersten Türanschlag durchgeführt wird, nachdem die Aufzugtür (10) mit Schleichgeschwindigkeit ($v_0$) wieder vom zweiten Türanschlag zurückfährt.

**Claims**

1. Process for the automatic determination of the maximum permissible impact speed ($v_{max}$) of a lift door (10), which is driven by a drive motor (14), onto an obstacle, which speed ($v_{max}$) depends on the mass (m) of the door, **characterized in that** a learning run is first carried out in which the lift door. (10) moves at creeping speed ($v_0$), during which run the current strength ($I_0$) of the drive motor (14) which overcomes the frictional forces of the lift door (10) is measured, **in that** the current strength ($I_0$) is subsequently increased by a defined amount ($\Delta$I) during a defined time interval ($\Delta$t) and, by this means, the lift door (10) accelerates in a defined manner. as a function of its mass (m) and the corresponding speed increase ($\Delta$v) is determined, **in that** the mass (m) of the lift door is calculated in the closed-loop and open-chain electronic device (18) from the cur-

rent increase ($\Delta I$), the time interval ($\Delta t$) of the current increase ($\Delta I$) and the resulting speed increase ($\Delta v$), and **in that** the maximum permissible impact speed ($v_{max}$) of the lift door is determined from the calculated lift door mass (m) and is stored in a permanent memory (26) of the closed-loop and open-chain electronic device (18).

2. Process according to Claim 1, **characterized in that** the learning run is carried out between a first door stop and a second door stop of the lift door (10).

3. Process according to Claims 1 and 2, **characterized in that** the defined acceleration of the lift door (10) is executed in a central section of the movement path of the lift door (10), between the second door stop and the first door stop, after the lift door (10) has moved back again with creeping speed ($v_0$) from the second door stop.

**Revendications**

1. Procédé pour la détermination automatique de la vitesse d'impact maximale admissible ($V_{max}$) dépendant de sa masse (m) d'une porte d'ascenseur (10) entraînée par un moteur d'entraînement (14) sur un obstacle, **caractérisé en ce qu'**est établi un trajet d'apprentissage selon lequel la porte d'ascenseur (10) se déplace avec une vitesse d'approche lente ($V_0$), l'intensité $I_0$ alimentant le moteur d'entraînement (14) surmontant les forces de frottement de la porte d'ascenseur (10) étant mesurée, **en ce que** l'intensité du courant $I_0$ est ensuite augmentée pendant une période de temps déterminée ($\Delta t$) d'une valeur définie ($\Delta I$) et par suite la porte d'ascenseur (10) est accélérée d'un degré défini en fonction de sa masse (m) et l'accroissement de vitesse correspondant ($\Delta v$) est déterminé, **en ce que**, à partir de l'augmentation d'intensité ($\Delta I$), de la durée ($\Delta t$), de l'augmentation d'intensité ($\Delta I$) et de l'accroissement de vitesse en résultant ($\Delta v$) est calculée dans un système de régulation et de commande électronique (18) la masse (m) de la porte d'ascenseur et **en ce que**, à partir de la masse (m) calculée de la porte d'ascenseur, la vitesse d'impact maximale admissible ($V_{max}$) de la porte d'ascenseur est déterminée et est emmagasinée dans une réserve non volatile du système de régulation et de commande électronique (18).

2. Procédé selon la revendication 1, **caractérisé en ce que** le trajet d'apprentissage est établi entre un premier et un second impact de la porte d'ascenseur (10).

3. Procédé selon les revendications 1 et 2, **caractéri-** sé en ce que l'accélération définie de la porte d'ascenseur (10) est établie dans une section intermédiaire du trajet de la porte d'ascenseur (10) entre le premier et le second impact, après que la porte d'ascenseur (10) avec sa vitesse d'apprentissage $V_0$ revienne depuis son second impact.

FIG.1

FIG.2

FIG.3